# EUROPEAN PATENT SPECIFICATION

(11) **EP 4 385 814 B1**
(45) Date of publication and mention of the grant of the patent: **28.01.2026**
(21) Application number: 23215828.7
(22) Date of filing: 12.12.2023
(51) Int. Cl.: B60N 2/28

(54) **CAR SEAT FOR CHILDREN**
FAHRZEUGKINDERSITZ
SIEGE DE VEHICULE POUR ENFANTS

(30) Priority: 16.12.2022 IT 202200025791
(43) Date of publication of application: 19.06.2024
(73) Proprietor: Artsana S.p.A., 22070 Grandate (CO) (IT)
(72) Inventor: MERLI, Gianluca, 22070 Grandate CO (IT); ANSELMI, Lorenzo, 22070 Grandate CO (IT)
(74) Representative: Perani & Partners S.p.A.

(56) References cited:
- EP-A1- 3 450 245
- US-B1- 6 196 629

## Description

### Technical Field

The invention is developed in the technical field of car seats.

### Prior art

Car seats for children are known in the art and comprise components such as a seat, with a seating and a backrest, for receiving a child, and a shell, with a cavity, within which the seat is positioned.

Several seat recline mechanisms are known in the art.

For example, EP718145 A1 describes a booster seat with a pair of hinges for rotatably constraining the seating to the backrest, for rotating the seat between a seated position and an extended position.

Furthermore, EP1969974 A describes a booster seat in which the seating and the backrest are rotatably constrained to each other and in which the backrest is slidably and rotatably constrained with respect to a strap that surrounds it, by means of a guide, so as to allow reclining the seat. The strap is hinged to the outer wall of the seating while it is constrained by means of rails to the outer wall of the backrest.

Further known document is EP 3450245 A1, which describes a car seat for children provided with an apparatus for a seat belt. The car seat has a seating and a backrest that are rotatably constrained as they are hinged to each other, and movable with respect to a protective shell between two operating configurations, i.e. seated and extended. The rototranslation of the backrest and of the seating with respect to the protective shell is enabled by a guide system, comprising a slot and a post slidable within the slot. Such a guide system is placed between the shell and at least one between the backrest and the seating. In particular, the slot is arranged on the side wall of the shell while the post is made on the side part facing the side wall of the shell of at least one between seating and backrest. This guide system allows the seating and the backrest to rotate and translate with respect to the shell when passing from one operating configuration to another.

### Problem of the prior art

In some car seats of the prior art, the seating and the backrest are rotatably constrained to each other and in turn constrained with respect to the shell to rotate and translate with respect to it. By reclining the seat, the seating slides until it protrudes with respect to the shell. In particular, the constraint systems featured by the booster seats of the prior art, passing from a seated position to an extended position, result in the frontal translation of the seating, which tends to extend beyond the shell once the extended position has been reached. This is particularly disadvantageous when the booster seat is positioned on the seat of a vehicle. In fact, in this context, the child must be positioned in such a way that he/she is facing the backrest of the seat. When the seat is reclined, the seating comes into contact with the backrest of the vehicle, preventing it from reclining completely.

### Object of the invention

In this context, the technical task underpinning the present invention is to provide a practical car seat to be used, which presents an alternative recline mechanism with respect to those known and which is reclinable in any positioning with respect to the seat of a vehicle.

In particular, the object of the present invention is to provide a car seat for children in which the seating does not protrude excessively from the shell, in particular when the seat switches from the seated to the extended position.

The defined technical task and the specified aims are substantially achieved by a car seat comprising the technical characteristics set forth in one or more of the appended claims.

Advantageously, this car seat solves the technical problem as it comprises a second hinge, at the seating. In this way, since the backrest has its own rotation axis, the seating is able to rotate with respect to said rotation axis, while reclining, without protruding from the shell. In addition, the seating and the backrest are rotatably and slidably constrained to each other to allow a relative movement between them.

### LIST OF FIGURES

Further features and advantages of the present invention will become more apparent from the indicative and thus non-limiting description of a preferred but non-exclusive embodiment of a booster seat, as illustrated in the attached drawings in which:

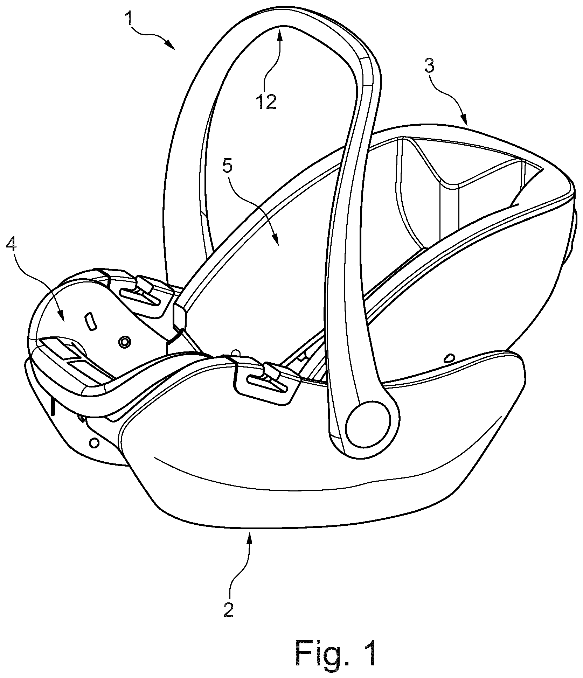

- figure 1 is a side perspective view of a booster seat, according to the present invention,
- figure 2 is a side view of the booster seat, in a seated position,
- figure 3 is a side view of the booster seat, in an extended position,
- figure 4 is a sectional side view of the booster seat, in a seated position,
- figure 5 is a sectional side view of the booster seat, in an extended position,
- figure 6 is a perspective view of the booster seat, with the removal of an aesthetic cover.

### DETAILED DESCRIPTION

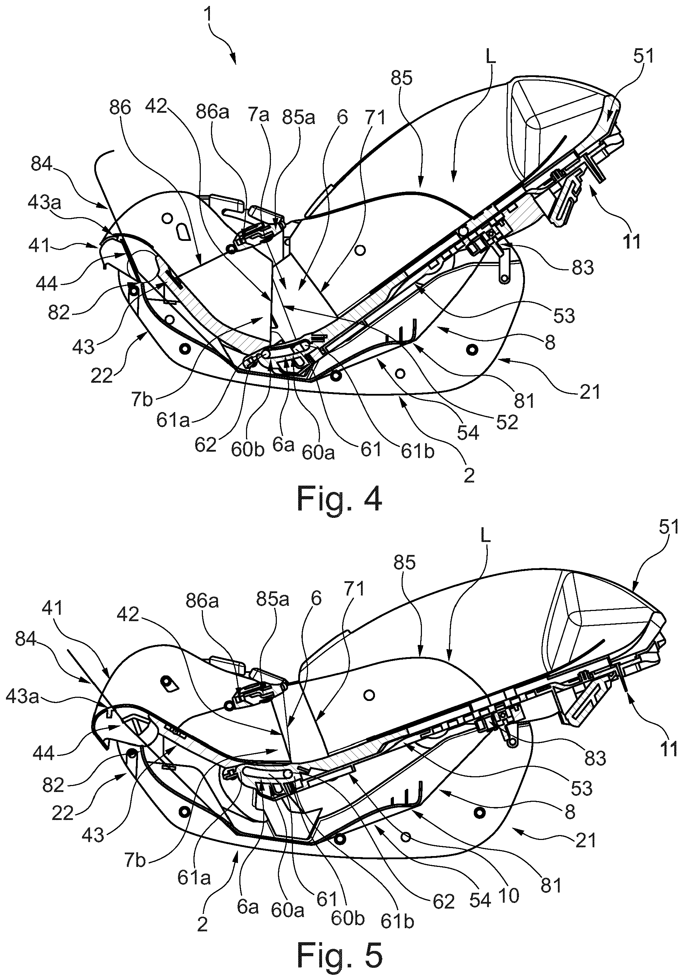

The present invention relates to a car seat 1. The car seat 1 comprises a shell 2, shown in figure 4-6, provided with a cavity, and a seat 3. Preferably, the seat 3 is covered with padded material to accommodate an infant. Preferably, the shell 2 comprises an aesthetic cover, which covers the shell 2 on both sides.

The seat 3 is configured to receive a child and is at least partially inserted in the cavity of the shell 2.

The seat 3 comprises a backrest 5 and a seating 4. The backrest 5 is configured to receive the torso of a child positioned in the car seat 1, while the seating 4 is configured to receive the legs of a child.

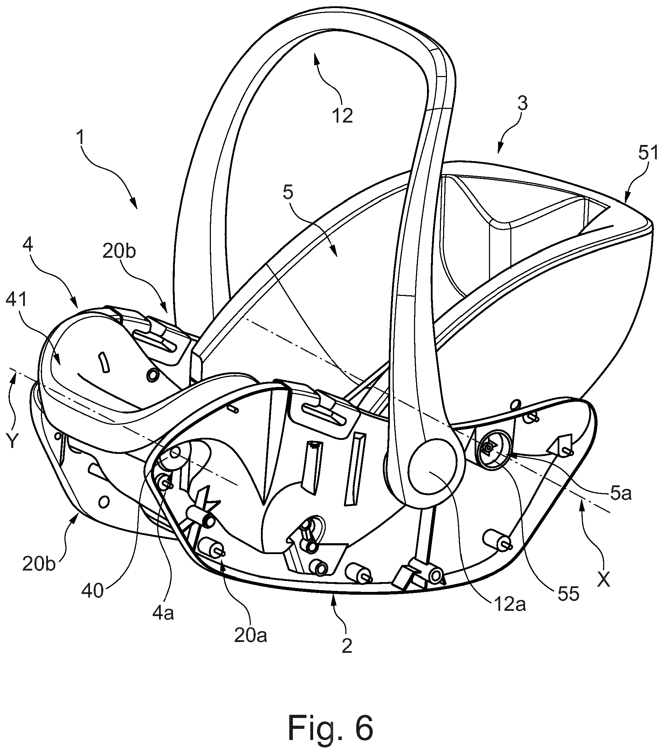

As visible in figure 6, the backrest 5 is rotatably constrained to the shell 2 at a first hinge mechanism 5a. As visible in figure 6, the seating 4 is rotatably constrained to the shell 2 at a second hinge mechanism 4a.

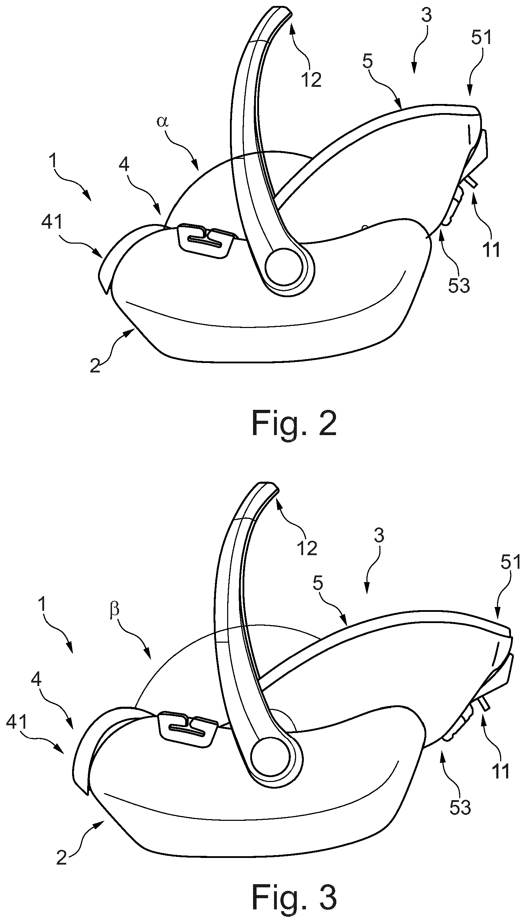

Furthermore, the backrest 5 and the seating 4 are movable with respect to the shell 2 to switch the seat 3 between an extended position, shown in figures 3 and 5, and a seated position, shown in figures 2 and 4.

Advantageously, the seating 4 is able to rotate with respect to the shell 2 around the second hinge mechanism 4a, without sliding and thus protruding with respect to the shell 2 in the extended position of the seat 3. Similarly, the backrest 5 is able to rotate with respect to the shell 2 around the first hinge mechanism 5a, without sliding with respect to the shell 2.

Furthermore, as shown in figures 4 and 5, the backrest 5 and the seating 4 are at least in part overlapped at an overlapping zone 6. The backrest 5 and the seating 4 are slidably and rotatably constrained to each other at the overlapping zone 6 by means of movement means 6a for switching the seat 3 between the extended position and the seated position. In other words, the backrest 5 and the seating 4 rotate with respect to the shell without sliding, while rotating and sliding with respect to each other when passing between the extended and seated position.

The overlapping zone 6 comprises a first overlapping portion 7a at the backrest 5 and a second overlapping portion 7b at the seating 4.

The movement means 6a comprise a first movement element 60a at the first overlapping portion 7a and a second movement element 60b at the second overlapping portion 7b. The first movement element 60a and the second movement element 60b are slidable and rotatable with respect to each other in order to move the backrest 5 and the seating 4 at the overlapping zone 6, and in particular at the first and second overlapping portion 7a, 7b.

In the preferred embodiment, the first movement element 60a comprises at least one groove 61 and the second movement element 60b comprises at least one pin 62 sliding and rotatable in the respective groove 61, to make the seat 3 pass between the extended position and the seated position.

It is worth noting that the groove 61 comprises a first end 61a and a second end 61b. The pin 62 is configured to slide between the first end 61a and the second end 61b of the groove 61, maintaining the possibility to rotate. Furthermore, the pin 62 is positioned at the first end 61a when the seat 3 is in the seated position, whilst the pin 62 is positioned at the second end 61b when the seat 3 is in the extended position. Advantageously, both the seating 4 and the backrest 5 can rotate with respect to the shell 2, each of them being constrained to the shell in distinct zones. The movement of the seat 3 is therefore also made possible thanks to the constraint between the seating 4 and the backrest 5, which is rotatable and slidable at the same time.

Preferably, the backrest 5 and the seating 4 form a seated position angle α, when the seat 3 is in the seated position, comprised between 92° and 98°, preferably equal to 96°, indicated in figure 2.

Preferably, the backrest 5 and the seating 4 form an extended position angle β, when the seat 3 is in the extended position, comprised between 120° and 140°, preferably equal to 129.5°, indicated in figure 3.

The seating 4 comprises a first free end 41 and an opposite seating end 42, near the backrest 5. In addition, the backrest 5 comprises a second free end 51 and an opposite backrest end 52, near the seating 4. The first overlapping portion 7a can be found at the backrest end 52, while the second overlapping portion 7b can be found at the seating end 42.

Preferably, as shown in figure 4, at the first overlapping portion 7b, the backrest 5 has an edge 71, at which the backrest 5 has a thickness reduction. As shown in figure 5, the second overlapping portion 7b of the seating 4 is overlapped with respect to the first overlapping portion 7a of the backrest 5. Preferably, the seating end 42 is configured to come into abutment with the edge 71, when the seat 3 is in the extended position. Advantageously, in the extended position, the backrest 5 and the seating 4 form a substantially continuous surface.

In one embodiment, the backrest 5 comprises a backrest rear wall 53 facing the shell 2 and provided with a pair of backrest pass-through openings. Preferably, the backrest rear wall 53 faces a first portion 21 of the shell 2. Preferably, the first portion 21 of the shell 2 comprises a first connection element 54 between the first side wall 20a and the second side wall 20b.

In one embodiment, the seating 4 comprises a rear seating wall 43 facing the shell 2. Preferably, the rear seating wall 43 faces a second portion 22 of the shell 2. Preferably, the second portion 22 of the shell 21 comprises a second connection element 44 between the first side wall 20a and the second side wall 20b, which is continuous with respect to the first connection element 54. Furthermore, the seating 4 is provided with a seating pass-through opening 43a, preferably at the first free end 41. The seating pass-through opening 43a is configured to put the second connection element 44 in communication with the external environment to allow the belt 8 to pass.

The car seat 1 further comprises a belt 8, configured to hold a child on the seat 3.

Preferably, the belt 8 comprises a central portion 81 configured to slide externally to the seat 3. The central portion 81 has a seating end 82 and a backrest end 83. Preferably, the central portion 81 is configured to slide along the first connection element 54 and the second connection element 44.

Preferably, the belt 8 comprises an adjustment portion 84, continuous with respect to the seating end 82 of the central portion 81 and projecting outwards, crossing the seating pass-through opening 43a. Preferably, there is a lock-release mechanism, active on the adjustment portion 84 at the seating pass-through opening 43a, to allow the adjustment of the tension of the belt 8.

Advantageously, the central portion 81 is configured to slide along the first connection element 54 and along the second connection element 44, when a user adjusts the tension of the belt 8.

Preferably, the belt 8 comprises a pair of shoulder portions 85, continuous with respect to the backrest end 83 and projecting outwards crossing the pair of backrest pass-through openings. Each shoulder portion 85 comprises a closing end 85a.

Preferably, the belt 8 comprises a fixed portion 86 constrained to the seating 4 and comprising a second closing end 86a couplable with the first closing end 85a of the pair of shoulder portions 85 to hold a child in position on the seat 3. Preferably, the fixed portion 86 is positioned in order to be between the legs of a child when he/she is positioned on the seat 3. More preferably, the belt 8 is a three-point belt.

In use, an adult, after positioning a child on the seat 3, couples the second closing end 86a with the first closing end 85a. Next, he/she adjusts the tension of the belt 8 by pulling the adjustment portion 84, so that a child is well secured by the seat 3. Preferably, thanks to the configuration of the car seat 1 and to the geometry of the first and second connection element 44, 54, when the seat 3 switches from the seated to the extended position and vice versa, the belt 8 maintains a constant tension. Advantageously, the comfort of a child positioned in the seat is guaranteed. Advantageously, a user does not have to adjust the tension of the belt 8 when changing the position of the seat 3. In other words, the pair of shoulder portions 85, when the first closing end 85a is coupled with the second closing end 86a, is configured to maintain the same tension level when the seat 3 switches from the seated position to the extended position and vice versa. This advantage derives from the particular structure of the car seat, and in particular from the synergy of the mechanical coupling of shell, seating and backrest with the arrangement of the belt, which is slidable within the structure and maintains its tension level constant in the various reclining positions. It should be pointed out that the belt 8 remains locked by the lock-release mechanism at the adjustment portion 84, at the tension level selected by the user. In fact, the user can pull the adjustment portion 84 to increase the tension level of the belt 8, i.e. by reducing the length L of the belt 8 between the lock-release mechanism and the fixed portion 86. Furthermore, the user may release the lock-release mechanism, for example by pressing a button or a lever, to release the grip on the adjustment portion 84 in order to reduce tension of the belt, i.e. to increase the length L of the belt 8 between the lock-release mechanism and the fixed portion 86.

In a preferred embodiment, the car seat 1 comprising a base, not shown in the figures, positionable on a seat of a vehicle. Preferably, the base can be fixed to the seat of a vehicle by means of hooking systems, such as ISOFIX type.

The car seat 1 comprises a movable handle 12, rotatably connected to the shell 2 and configured to switch at least between a raised position and a lowered position. Preferably, the movable handle 12 is in the raised position when a user transports the car seat 1. Preferably, the movable handle 12 is in the lowered position, not shown in the figure, when the car seat 1 is not to be transported. Preferably, the movable handle 12 is hinged to the shell 2 at a first hinge 12a and an opposite second hinge.

In this preferred embodiment, the shell 2 can be hooked to the base, as will be further described below.

Preferably, the car seat 1 comprises a lock-release mechanism for switching the seat 3 between the extended position and the seated position. Preferably, the car seat 1 comprises an operating handle 11, at the backrest 5, configured to operate the lock-release mechanism 10.

As known to the person skilled in the art, the lock-release mechanism comprises pins and relative seats, not visible in the figure. In particular, the mechanism comprises seats for the seated mode, engaged by the pins when the seat is in the seated position, and seats for the extended mode, engaged by the pins when the seat is in the extended position. Preferably the seats are positioned on the shell 2 at the base.

In use, when a user wants to switch the seat from the seated to the extended position, the operating handle 11 is pressed, to free the pins from the seated mode seats and to move the backrest 5. By releasing the operating handle 11, the pins enter the extended mode seats, locking the backrest 5 in the extended position.

It is worth noting that the shell 2 has a first side wall 20a and a second side wall 20b, opposite each other and connected transversely by the first and second connection element 44 and 54 in order to define the cavity which separates them.

In more detail, the car seat 1 comprises a first rod, configured to fix the shell 2 to the base. Preferably, the first rod connects the first side wall 20a with the second side wall 20b of the shell 2. Preferably, the base comprises hooking means configured to retain the first rod, in order to fix the shell 2 on the base.

Preferably, the belt 8 is configured to slide between the first rod and the first connection element 54. In other words, the belt 8 does not interfere with the first rod in the hooking and unhooking phase with the hooking means.

Preferably, the car seat 1 comprises a second rod, configured to fix the shell 2 to the base. Preferably, the belt 8 is configured to slide between the second rod and the second connection element 44. Preferably, the hooking means of the base are configured to retain also the second rod, in order to fix the shell 2 on the base.

**In** a preferred embodiment, the first hinge mechanism 5a comprises a first hinge 55 which rotatably connects a first side of the backrest 5 to the first side wall 20a of the shell 2, and a second hinge, not visible in the figure, opposite to the first hinge 55, which rotatably connects a second side of the backrest 5, opposite to the first side of the backrest 55, to the second side wall 20b of the shell 2.

**In** this preferred embodiment, the second hinge mechanism 4a comprises a third hinge 40 which rotatably connects a first side of the seating 4 to the first side wall 20a of the shell 2, and a fourth hinge, not visible in the figure, opposite to the third hinge 40, which rotatably connects a second side of the seating 4, opposite to the first side of the seating 20a, to the second side wall 20b of the shell 2.

**In** more detail, the first hinge 55 comprises a first cylindrical element constrained in a respective cylindrical seat of the backrest 5 and rotatably constrained in a respective cylindrical seat on the first side wall 20a and the second hinge comprises a second cylindrical element constrained in a respective cylindrical seat of the backrest 5 and rotatably constrained in a respective cylindrical seat on the second side wall 20b. The first cylindrical element and the second cylindrical element are configured to rotatably constrain the backrest 5 with respect to the shell 2 along a backrest rotation axis X, passing through the element of the first and second cylindrical element.

Preferably, the first and second cylindrical element are caps. Still preferably, the caps are made of plastic material.

Furthermore, the third hinge 40 comprises a third cylindrical element constrained in a respective seat, preferably cylindrical, of the seating 4 and rotatably constrained in a respective seat, preferably cylindrical, on the first side wall 20a and the fourth hinge comprises a fourth cylindrical element constrained in a respective seat, preferably cylindrical, of the seating 4 and rotatably constrained in a respective seat, preferably cylindrical, on the side wall 20b, the third cylindrical element and the fourth cylindrical element are configured to rotatably constrain the seating 4 with respect to the shell 2 along a seating rotation axis Y, parallel to the backrest rotation axis X, passing through the third and fourth cylindrical element.

Preferably, the third and fourth cylindrical element are caps. Still preferably, the caps are made of plastic material.

## Claims

1. Car seat (1) for children, comprising:
- a shell (2) provided with a cavity,
- a seat (3) configured to receive a child and at least partially inserted in the cavity of the shell (2), the seat (3) comprising a backrest (5) and a seating (4), the backrest (5) being rotatably constrained to the shell (2) at a first hinge mechanism (5a), the backrest (5) and the seating (4) being movable with respect to the shell (2) to switch the seat (3) between an extended position and a seated position,
**characterized in that**
- the seating (4) is rotatably constrained to the shell (2) at a second hinge mechanism (4a),
- the backrest (5) and the seating (4) are at least in part overlapped at an overlapping zone (6), the backrest (5) and the seating (4) being slidably and rotatably constrained at the overlapping zone (6) by movement means (6a) for switching the seat (3) between the extended position and the seated position.

2. Car seat (1) according to claim 1, wherein the overlapping zone (6) comprises a first overlapping portion (7a) at the backrest (5) and a second overlapping portion (7b) at the seating (4), the movement means (6a) comprise a first movement element (60a) at the first overlapping portion (7a) and a second movement element (60b) at the second overlapping portion (7b), the first movement element (60a) and the second movement element (60b) being slidably and rotatably constrained to allow the relative movement between the backrest (5) and the seating (4) at the overlapping zone (6) when the seat (3) switches between the extended position and the seated position.

3. Car seat (1) according to claim 2, wherein the first movement element (60a) comprises at least one groove (61) and the second movement element (60b) comprises at least one pin (62) sliding and rotatable along the respective groove (61), to make the seat (3) pass between the extended position and the seated position.

4. Car seat (1) according to claim 3, wherein the groove (61) comprises a first end (61a) and a second end (61b), the pin (62) being configured to slide between the first end (61a) and the second end (61b) of the groove (61), the pin (62) being positioned at the first end (61a) when the seat (3) is in the seated position, the pin (62) being positioned at the second end (61b) when the seat (3) is in the extended position.

5. Car seat (1) according to any one of claims 2 to 4, wherein the seating (4) comprises a first free end (41) and an opposite seating end (42) near the backrest (5), and the backrest (5) comprises a second free end (51) and an opposite backrest end (52) near the seating (4), the first overlapping portion (7a) being detectable at the backrest end (52), the second overlapping portion (7b) being detectable at the seating end (42).

6. Car seat (1) according to any one of claims 1 to 5, wherein:
- the backrest (5) comprises a backrest rear wall (53) facing the shell (2) and provided with a pair of backrest pass-through openings,
- the seating (4) comprises a rear seating wall (43) facing the shell (2), the seating (4) being provided with a seating pass-through opening (43a),
- the car seat (1) comprising a belt (8) configured to hold a child on the seat (3), the belt (8) comprising:
- a central portion (81) configured to slide outside the seat (3) and having a seating end (82) and a backrest end (83),
- an adjustment portion (84), continuous with respect to the seating end (82) of the central portion (81) and projecting outwards crossing the seating pass-through opening (43a),
- a pair of shoulder portions (85), continuous with respect to the backrest end (83) and projecting outwards crossing the pair of backrest pass-through openings, the pair of shoulder portions (85) comprising a first closing end (85a),
- a fixed portion (86) constrained to the seating (4) and comprising a second closing end (86a) couplable with the first closing end (85a) of the pair of shoulder straps (85) to hold a child in position on the seat (3).

7. Car seat (1) according to claim 6, wherein at least the pair of shoulder portions (85) is configured to maintain its tension level constant when the seat (3) switches from the seated position to the extended position and vice versa, when the first closing end (85a) is coupled with the second closing end (86a).

8. Car seat (1) according to any one of the preceding claims, comprising a base positionable on a seat of a vehicle, the shell (2) being couplable to the base.

9. Car seat (1) according to any one of claims 1 to 8, comprising a lock-release mechanism for switching the seat (3) between the extended position and the seated position, and an operating handle (11) at the backrest (5), configured to operate the lock-release mechanism (10).

10. Car seat (1) according to any one of claims 1 to 9, comprising a movable handle (12), rotatably connected to the shell (2) and configured to switch at least between a raised position and a lowered position.

11. Car seat (1) according to any one of claims 1 to 10, wherein:
- the shell (2) has a first side wall (20a) and a second side wall (20b), opposite each other and connected transversely in order to define the cavity which separates them,
- the first hinge mechanism (5a) comprises a first hinge (55) which rotatably connects a first side of the backrest (5) to the first side wall (20a) of the shell (2), and a second hinge opposite the first hinge (55), which rotatably connects a second side of the backrest (5), opposite the first side of the backrest (55), to the second side wall (20b) of the shell (2),
- the second hinge mechanism (4a) comprises a third hinge (40) which rotatably connects a first side of the seating (4) to the first side wall (20a) of the shell (2), and a fourth hinge, opposite the third hinge (40), which rotatably connects a second side of the seating (4), opposite the first side of the seating (20a), to the second side wall (20b) of the shell (2).

12. Car seat (1) according to claim 11, wherein the first hinge (55) comprises a first cylindrical element constrained in a respective seat on the backrest (5) and rotatably constrained in a respective seat on the first side wall (20a) and the second hinge comprises a second cylindrical element constrained in a respective seat on the backrest (5) and rotatably constrained in a respective seat on the second side wall (20b), the first cylindrical element and the second cylindrical element being configured to rotatably constrain the backrest (5) with respect to the shell (2) along a backrest rotation axis (X), passing through the first cylindrical element (55) and the second cylindrical element, and wherein the third hinge (40) comprises a third cylindrical element constrained in a respective seat on the seating (4) and rotatably constrained in a respective seat on the first side wall (20a) and the fourth hinge comprises a fourth cylindrical element constrained in a respective seat on the seat (3) and rotatably connected in a respective seat on the second side wall (20b), the third cylindrical element and the fourth cylindrical element are configured to rotatably constrain the seating (4), with respect to a seating rotation axis (Y), parallel to the backrest rotation axis (X), and passing through the third and the fourth cylindrical element.

## Patentansprüche

1. Autositz (1) für Kinder, umfassend:
- eine Schale (2), die mit einem Hohlraum versehen ist,
- einen Sitz (3), der dazu ausgelegt ist, ein Kind aufzunehmen und zumindest teilweise in den Hohlraum der Schale (2) eingesetzt ist, wobei der Sitz (3) eine Rückenlehne (5) und eine Sitzfläche (4) umfasst, wobei die Rückenlehne (5) an einem ersten Scharniermechanismus (5a) drehbar an der Schale (2) gelagert ist, wobei die Rückenlehne (5) und die Sitzfläche (4) in Bezug auf die Schale (2) beweglich sind, um den Sitz (3) zwischen einer ausgefahrenen Position und einer Sitzposition zu wechseln,
**dadurch gekennzeichnet, dass**
- die Sitzfläche (4) an einem zweiten Scharniermechanismus (4a) drehbar an der Schale (2) gelagert ist,
- die Rückenlehne (5) und die Sitzfläche (4) zumindest teilweise in einer Überlappungszone (6) überlappen, wobei die Rückenlehne (5) und die Sitzfläche (4) in der Überlappungszone (6) mittels Bewegungsmitteln (6a) gleitend und drehbar gelagert sind, um den Sitz (3) zwischen der ausgefahrenen Position und der Sitzposition zu wechseln.

2. Autositz (1) nach Anspruch 1, **dadurch gekennzeichnet, dass** die Überlappungszone (6) einen ersten Überlappungsabschnitt (7a) an der Rückenlehne (5) und einen zweiten Überlappungsabschnitt (7b) an der Sitzfläche (4) umfasst, wobei die Bewegungsmittel (6a) ein erstes Bewegungselement (60a) an dem ersten Überlappungsabschnitt (7a) und ein zweites Bewegungselement (60b) an dem zweiten Überlappungsabschnitt (7b) umfassen, wobei das erste Bewegungselement (60a) und das zweite Bewegungselement (60b) gleitend und drehbar gelagert sind, um die relative Bewegung zwischen der Rückenlehne (5) und der Sitzfläche (4) in der Überlappungszone (6) zu ermöglichen, wenn der Sitz (3) zwischen der ausgefahrenen Position und der Sitzposition wechselt.

3. Autositz (1) nach Anspruch 2, **dadurch gekennzeichnet, dass** das erste Bewegungselement (60a) mindestens eine Nut (61) und das zweite Bewegungselement (60b) mindestens einen Stift (62) umfasst, der entlang der jeweiligen Nut (61) gleitend und drehbar ist, um den Sitz (3) zwischen der ausgefahrenen Position und der Sitzposition zu wechseln.

4. Autositz (1) nach Anspruch 3, **dadurch gekennzeichnet, dass** die Nut (61) ein erstes Ende (61a) und ein zweites Ende (61b) umfasst, wobei der Stift (62) dazu ausgelegt ist, zwischen dem ersten Ende (61a) und dem zweiten Ende (61b) der Nut (61) zu gleiten, wobei der Stift (62) an dem ersten Ende (61a) positioniert ist, wenn der Sitz (3) in der Sitzposition ist, wobei der Stift (62) an dem zweiten Ende (61b) positioniert ist, wenn der Sitz (3) in der ausgefahrenen Position ist.

5. Autositz (1) nach einem der Ansprüche 2 bis 4, **dadurch gekennzeichnet, dass** die Sitzfläche (4) ein erstes freies Ende (41) und ein gegenüberliegendes Sitzflächenende (42) nahe der Rückenlehne (5) umfasst, und die Rückenlehne (5) ein zweites freies Ende (51) und ein gegenüberliegendes Rückenlehnenende (52) nahe der Sitzfläche (4) umfasst, wobei der erste Überlappungsabschnitt (7a) an dem Rückenlehnenende (52) vorgesehen ist, wobei der zweite Überlappungsabschnitt (7b) an dem Sitzflächenende (42) vorgesehen ist.

6. Autositz (1) nach einem der Ansprüche 1 bis 5, **dadurch gekennzeichnet, dass**:
- die Rückenlehne (5) eine hintere Rückenlehnenwand (53) umfasst, die der Schale (2) zugewandt ist und mit einem Paar von Rückenlehnen-Durchgangsöffnungen versehen ist,
- die Sitzfläche (4) eine hintere Sitzflächenwand (43) umfasst, die der Schale (2) zugewandt ist, wobei die Sitzfläche (4) mit einer Sitzflächen-Durchgangsöffnung (43a) versehen ist,
- der Autositz (1) einen Gurt (8) umfasst, der dazu ausgelegt ist, ein Kind auf dem Sitz (3) zu halten, wobei der Gurt (8) umfasst:
▪ einen Mittelabschnitt (81), der dazu ausgelegt ist, außerhalb des Sitzes (3) zu gleiten und ein Sitzflächenende (82) und ein Rückenlehnenende (83) aufweist,
▪ einen Einstellabschnitt (84), der in Bezug auf das Sitzflächenende (82) des Mittelabschnitts (81) durchgehend ist und nach außen ragt, wobei er die Sitzflächen-Durchgangsöffnung (43a) kreuzt,
▪ ein Paar Schulterabschnitte (85), die in Bezug auf das Rückenlehnenende (83) durchgehend sind und nach außen ragen, wobei sie das Paar von Rückenlehnen-Durchgangsöffnungen kreuzen, wobei das Paar Schulterabschnitte (85) ein erstes Verschlussende (85a) umfasst,
▪ einen festen Abschnitt (86), der an der Sitzfläche (4) befestigt ist und ein zweites Verschlussende (86a) umfasst, das mit dem ersten Verschlussende (85a) des Paares von Schulterabschnitten (85) koppelbar ist, um ein Kind auf dem Sitz (3) in Position zu halten.

7. Autositz (1) nach Anspruch 6, **dadurch gekennzeichnet, dass** zumindest das Paar Schulterabschnitte (85) dazu ausgelegt ist, sein Spannungsniveau konstant zu halten, wenn der Sitz (3) von der Sitzposition in die ausgefahrene Position und umgekehrt wechselt, wenn das erste Verschlussende (85a) mit dem zweiten Verschlussende (86a) gekoppelt ist.

8. Autositz (1) nach einem der vorhergehenden Ansprüche, umfassend eine Basis, die auf einem Fahrzeugsitz positionierbar ist, wobei die Schale (2) mit der Basis koppelbar ist.

9. Autositz (1) nach einem der Ansprüche 1 bis 8, umfassend einen Verriegelungs- und Entriegelungsmechanismus zum Wechseln des Sitzes (3) zwischen der ausgefahrenen Position und der Sitzposition, und einen Betätigungsgriff (11) an der Rückenlehne (5), der dazu ausgelegt ist, den Verriegelungs- und Entriegelungsmechanismus (10) zu betätigen.

10. Autositz (1) nach einem der Ansprüche 1 bis 9, umfassend einen beweglichen Griff (12), der drehbar mit der Schale (2) verbunden ist und dazu ausgelegt ist, zumindest zwischen einer angehobenen Position und einer abgesenkten Position zu wechseln.

11. Autositz (1) nach einem der Ansprüche 1 bis 10, **dadurch gekennzeichnet, dass**:
- die Schale (2) eine erste Seitenwand (20a) und eine zweite Seitenwand (20b) aufweist, die einander gegenüberliegen und quer verbunden sind, um den Hohlraum zu definieren, der sie trennt,
- der erste Scharniermechanismus (5a) ein erstes Scharnier (55) umfasst, das eine erste Seite der Rückenlehne (5) drehbar mit der ersten Seitenwand (20a) der Schale (2) verbindet, und ein zweites Scharnier, das dem ersten Scharnier (55) gegenüberliegt und eine zweite Seite der Rückenlehne (5), die der ersten Seite des ersten Scharniers (55) gegenüberliegt, drehbar mit der zweiten Seitenwand (20b) der Schale (2) verbindet,
- der zweite Scharniermechanismus (4a) ein drittes Scharnier (40) umfasst, das eine erste Seite der Sitzfläche (4) drehbar mit der ersten Seitenwand (20a) der Schale (2) verbindet, und ein viertes Scharnier, das dem dritten Scharnier (40) gegenüberliegt und eine zweite Seite der Sitzfläche (4), die der ersten Seite der Sitzfläche (20a) gegenüberliegt, drehbar mit der zweiten Seitenwand (20b) der Schale (2) verbindet.

12. Autositz (1) nach Anspruch 11, **dadurch gekennzeichnet, dass** das erste Scharnier (55) ein erstes zylindrisches Element umfasst, das in einem jeweiligen Sitz an der Rückenlehne (5) gelagert und in einem jeweiligen Sitz an der ersten Seitenwand (20a) drehbar gelagert ist, und das zweite Scharnier ein zweites zylindrisches Element umfasst, das in einem jeweiligen Sitz an der Rückenlehne (5) gelagert und in einem jeweiligen Sitz an der zweiten Seitenwand (20b) drehbar gelagert ist, wobei das erste zylindrische Element und das zweite zylindrische Element dazu ausgelegt sind, die Rückenlehne (5) in Bezug auf die Schale (2) entlang einer Rückenlehnen-Rotationsachse (X) drehbar zu lagern, die durch das erste zylindrische Element (55) und das zweite zylindrische Element verläuft, und wobei das dritte Scharnier (40) ein drittes zylindrisches Element umfasst, das in einem jeweiligen Sitz an der Sitzfläche (4) gelagert und in einem jeweiligen Sitz an der ersten Seitenwand (20a) drehbar gelagert ist, und das vierte Scharnier ein viertes zylindrisches Element umfasst, das in einem jeweiligen Sitz an der Sitzfläche (4) gelagert und in einem jeweiligen Sitz an der zweiten Seitenwand (20b) drehbar gelagert ist, wobei das dritte zylindrische Element und das vierte zylindrische Element dazu ausgelegt sind, die Sitzfläche (4) in Bezug auf eine Sitzflächen-Rotationsachse (Y), parallel zur Rückenlehnen-Rotationsachse (X), drehbar zu lagern, und die durch das dritte und das vierte zylindrische Element verläuft.

## Revendications

1. Siège auto (1) pour enfants, comprenant :
- une coque (2) pourvue d'une cavité,
- un siège (3) configuré pour recevoir un enfant et au moins partiellement inséré dans la cavité de la coque (2), le siège (3) comprenant un dossier (5) et une assise (4), le dossier (5) étant contraint en rotation à la coque (2) au niveau d'un premier mécanisme de charnière (5a), le dossier (5) et l'assise (4) étant mobiles par rapport à la coque (2) pour faire passer le siège (3) entre une position étendue et une position assise,
**caractérisé en ce que**
- l'assise (4) est contrainte en rotation à la coque (2) au niveau d'un deuxième mécanisme de charnière (4a),
- le dossier (5) et l'assise (4) se chevauchent au moins en partie au niveau d'une zone de chevauchement (6), le dossier (5) et l'assise (4) étant contraints en glissement et en rotation au niveau de la zone de chevauchement (6) par des moyens de mouvement (6a) pour faire passer le siège (3) entre la position étendue et la position assise.

2. Siège auto (1) selon la revendication 1, dans lequel la zone de chevauchement (6) comprend une première partie de chevauchement (7a) au niveau du dossier (5) et une deuxième partie de chevauchement (7b) au niveau de l'assise (4), les moyens de mouvement (6a) comprennent un premier élément de mouvement (60a) au niveau de la première partie de chevauchement (7a) et un deuxième élément de mouvement (60b) au niveau de la deuxième partie de chevauchement (7b), le premier élément de mouvement (60a) et le deuxième élément de mouvement (60b) étant contraints en glissement et en rotation pour permettre le mouvement relatif entre le dossier (5) et l'assise (4) au niveau de la zone de chevauchement (6) lorsque le siège (3) passe entre la position étendue et la position assise.

3. Siège auto (1) selon la revendication 2, dans lequel le premier élément de mouvement (60a) comprend au moins une rainure (61) et le deuxième élément de mouvement (60b) comprend au moins une broche (62) coulissant et rotative le long de la rainure (61) respective, pour faire passer le siège (3) entre la position étendue et la position assise.

4. Siège auto (1) selon la revendication 3, dans lequel la rainure (61) comprend une première extrémité (61a) et une deuxième extrémité (61b), la broche (62) étant configurée pour coulisser entre la première extrémité (61a) et la deuxième extrémité (61b) de la rainure (61), la broche (62) étant positionnée à la première extrémité (61a) lorsque le siège (3) est en position assise, la broche (62) étant positionnée à la deuxième extrémité (61b) lorsque le siège (3) est en position étendue.

5. Siège auto (1) selon l'une quelconque des revendications 2 à 4, dans lequel l'assise (4) comprend une première extrémité libre (41) et une extrémité d'assise opposée (42) près du dossier (5), et le dossier (5) comprend une deuxième extrémité libre (51) et une extrémité de dossier opposée (52) près de l'assise (4), la première partie de chevauchement (7a) étant détectable à l'extrémité du dossier (52), la deuxième partie de chevauchement (7b) étant détectable à l'extrémité de l'assise (42).

6. Siège auto (1) selon l'une quelconque des revendications 1 à 5, dans lequel :
- le dossier (5) comprend une paroi arrière de dossier (53) faisant face à la coque (2) et pourvue d'une paire d'ouvertures traversantes de dossier,
- l'assise (4) comprend une paroi arrière d'assise (43) faisant face à la coque (2), l'assise (4) étant pourvue d'une ouverture traversante d'assise (43a),
- le siège auto (1) comprenant une ceinture (8) configurée pour maintenir un enfant sur le siège (3), la ceinture (8) comprenant:
▪ une partie centrale (81) configurée pour coulisser à l'extérieur du siège (3) et ayant une extrémité d'assise (82) et une extrémité de dossier (83),
▪ une partie de réglage (84), continue par rapport à l'extrémité d'assise (82) de la partie centrale (81) et faisant saillie vers l'extérieur en traversant l'ouverture traversante d'assise (43a),
▪ une paire de parties d'épaule (85), continues par rapport à l'extrémité de dossier (83) et faisant saillie vers l'extérieur en traversant la paire d'ouvertures traversantes de dossier, la paire de parties d'épaule (85) comprenant une première extrémité de fermeture (85a),
▪ une partie fixe (86) contrainte à l'assise (4) et comprenant une deuxième extrémité de fermeture (86a) couplable avec la première extrémité de fermeture (85a) de la paire de sangles d'épaule (85) pour maintenir un enfant en position sur le siège (3).

7. Siège auto (1) selon la revendication 6, dans lequel au moins la paire de parties d'épaule (85) est configurée pour maintenir son niveau de tension constant lorsque le siège (3) passe de la position assise à la position étendue et vice versa, lorsque la première extrémité de fermeture (85a) est couplée à la deuxième extrémité de fermeture (86a).

8. Siège auto (1) selon l'une quelconque des revendications précédentes, comprenant une base positionnable sur un siège de véhicule, la coque (2) étant couplable à la base.

9. Siège auto (1) selon l'une quelconque des revendications 1 à 8, comprenant un mécanisme de verrouillage-déverrouillage pour faire passer le siège (3) entre la position étendue et la position assise, et une poignée de commande (11) au niveau du dossier (5), configurée pour actionner le mécanisme de verrouillage-déverrouillage (10).

10. Siège auto (1) selon l'une quelconque des revendications 1 à 9, comprenant une poignée mobile (12), reliée en rotation à la coque (2) et configurée pour basculer au moins entre une position relevée et une position abaissée.

11. Siège auto (1) selon l'une quelconque des revendications 1 à 10, dans lequel:
- la coque (2) a une première paroi latérale (20a) et une deuxième paroi latérale (20b), opposées l'une à l'autre et reliées transversalement afin de définir la cavité qui les sépare,
- le premier mécanisme de charnière (5a) comprend une première charnière (55) qui relie en rotation un premier côté du dossier (5) à la première paroi latérale (20a) de la coque (2), et une deuxième charnière opposée à la première charnière (55), qui relie en rotation un deuxième côté du dossier (5), opposé au premier côté de la première charnière (55), à la deuxième paroi latérale (20b) de la coque (2),
- le deuxième mécanisme de charnière (4a) comprend une troisième charnière (40) qui relie en rotation un premier côté de l'assise (4) à la première paroi latérale (20a) de la coque (2), et une quatrième charnière, opposée à la troisième charnière (40), qui relie en rotation un deuxième côté de l'assise (4), opposé au premier côté de l'assise (20a), à la deuxième paroi latérale (20b) de la coque (2).

12. Siège auto (1) selon la revendication 11, dans lequel la première charnière (55) comprend un premier élément cylindrique contraint dans un siège respectif sur le dossier (5) et contraint en rotation dans un siège respectif sur la première paroi latérale (20a) et la deuxième charnière comprend un deuxième élément cylindrique contraint dans un siège respectif sur le dossier (5) et contraint en rotation dans un siège respectif sur la deuxième paroi latérale (20b), le premier élément cylindrique et le deuxième élément cylindrique étant configurés pour contraindre en rotation le dossier (5) par rapport à la coque (2) le long d'un axe de rotation de dossier (X), passant par le premier élément cylindrique (55) et le deuxième élément cylindrique, et dans lequel la troisième charnière (40) comprend un troisième élément cylindrique contraint dans un siège respectif sur l'assise (4) et contraint en rotation dans un siège respectif sur la première paroi latérale (20a) et la quatrième charnière comprend un quatrième élément cylindrique contraint dans un siège respectif sur le siège (3) et relié en rotation dans un siège respectif sur la deuxième paroi latérale (20b), le troisième élément cylindrique et le quatrième élément cylindrique étant configurés pour contraindre en rotation l'assise (4), par rapport à un axe de rotation d'assise (Y), parallèle à l'axe de rotation de dossier (X), et passant par le troisième et le quatrième élément cylindrique.
